# EUROPÄISCHE PATENTSCHRIFT

(11) **EP 0 897 503 B1**
(45) Veröffentlichungstag und Bekanntmachung des Hinweises auf die Patenterteilung: **27.11.2002**
(21) Anmeldenummer: 97923752.6
(22) Anmeldetag: 18.04.1997
(51) Int. Cl.: F16L 13/14, B21D 39/04

(54) **VERFAHREN UND VORRICHTUNG ZUM HERSTELLEN EINER ROHRPRESSVERBINDUNG**
PROCESS AND DEVICE FOR PRODUCING A PIPE PRESS-FITTED CONNECTION
PROCEDE ET DISPOSITIF DE REALISATION D'UN RACCORDEMENT EMMANCHE DE TUYAUX

(30) Priorität: 08.05.1996 DE 19620165
(43) Veröffentlichungstag der Anmeldung: 24.02.1999
(73) Patentinhaber: Mapress GmbH & Co. KG, 40764 Langenfeld (DE)
(72) Erfinder: UNEWISSE, Heinz +di, (DE); FOERING, Herbert, D-42697 Solingen (DE); FRANZEN, Rainer, D-47802 Krefeld (DE)
(74) Vertreter: Meissner, Peter E., Dipl.-Ing.
(86) Internationale Anmeldenummer: DE9700816
(87) Internationale Veröffentlichungsnummer: WO97042440

(56) Entgegenhaltungen:
- EP-A- 0 343 395
- DE-A- 1 525 648
- US-A- 5 484 174

## Beschreibung

Die Erfindung betrifft ein Verfahren zum Herstellen einer Rohrpreßverbindung bestehend aus einem einen Anschlag aufweisenden Preßfitting und einem damit verpreßbaren glattendigen Leitungsrohrabschnitt gemäß dem Gattungsbegriff des Hauptanspruches.

Das seit langem im Markt eingeführte Preßfitting-System der Firma Mannesmann (siehe Firmenprospekt Mannesmann Preßfitting-System / Sanitär; Arbeits- und Verlegerichtlinie für Rohre und Preßfittings aus nichtrostendem Stahl für die Trinkwasserinstallation, Ausgabe 8/1994) besteht im wesentlichen aus drei Komponenten, nämlich
- dem Preßfitting
- dem Leitungsrohr
- dem Preßgerät einschließlich der dazugehörigen Preßschlinge bzw. Preßzange mit den darin angeordneten Preßbacken.

Nach dem Einschub des glattendigen Leitungsrohrabschnittes, dessen Endbereich nach dem Ablängen zuvor innen und außen entgratet und ggf. die das Leitungsrohr schützende Kunststoffummantelung abgemantelt wird, in den Preßfitting, erfolgt die Verpressung mit dem Preßwerkzeug. Bei einer anforderungsgerechten Verpressung werden Fitting und Rohr in der Festigkeitsebene unlösbar miteinander verklammert. Gleichzeitig wird in der Dichtheitsebene der Preßfitting-Wulst gezielt so verformt, daß der Dichtring eine vom Systemanbieter festgelegte Dichtringverformung erhält. Eine solche Verbindung ist dauerhaft funktionsfähig.

Ein vergleichbares Preßfitting-System ist in der US-A-5,484,174 offenbart. Im Unterschied zum zuvor erläuterten System weist der Preßfitting einen nach der Einschubseite hin sich erstreckenden nahezu zylindrischen Abschnitt auf. Das Preßwerkzeug weist eine Preßnut mit zwei in den Endbereichen angeordneten Preßstegen auf. Der Abstand zwischen den beiden Preßstegen ist so gewählt, daß nach dem Ansetzen des Preßwerkzeuges - wobei der Ringwulst des Preßfittings als Zentrierung dient - nur ein Preßsteg auf den Preßfitting einwirken kann. Dazu weist der Preßfitting in dem der Einschubseite abgewandten Bereich einen kleineren Durchmesser aufweisenden Abschnitt auf, der gleichzeitig als Anschlag für das einzuschiebende Leitungsrohr dient. Einer der beiden auf dem Preßwerkzeug angeordneten Preßstege formt nach dem Schließen der Preßbacken mehrere über den Umfang verteilt angeordnete Vertiefungen an, die im Sinne einer axialen Verklammerung auch auf das darunterliegende Leitungsrohr einwirken.

Nun sind aber abhängig von den Toleranzen der einzelnen Komponenten die Einprägungen in der Festigkeits- bzw. Dichtheitsebene unterschiedlich tief. Der Systemanbieter weiß aufgrund langjähriger Erfahrung, welche Einprägungen notwendig sind, um die erforderliche Festigkeit und dauerhafte Dichtheit zu erzielen. Die nachfolgenden Punkte zeigen den Einfluß der Toleranzen der Komponenten sowie das Zusammenspiel von Preßgerät und Preßfitting.
- Bei zu kleinem Außendurchmesser des Leitungsrohres reicht die Verpressung des Fittings nicht aus, um die Verbindung von Leitungsrohr und Fitting sicherzustellen und den Preßfitting-Wulst und damit den Dichtring hinreichend zu verformen.
- Bei nicht voll geschlossenem Preßraum, d. h. nicht geschlossenen Preßbacken wird das Profil der Preßbacke auf den Preßfitting nicht voll übertragen. Dadurch erfolgt weder die Verpressung in der Festigkeitsebene noch in der Dichtheitsebene anforderungsgerecht. Aus der momentanen Festigkeit und Dichtheit einer solchen Rohrverbindung darf nicht auf die dauerhafte Funktionstüchtigkeit geschlossen werden.

Geschlossene Preßbacken sind aber nur dann erreichbar, wenn das eingesetzte Preßgerät in seiner Geometrie und seinen Kräften exakt auf die Geometrie der Preßbacke abgestimmt ist - und auch hier müssen die Toleranzen berücksichtigt werden.

Betrachtet man ein Preßfitting-System, so sind es also nicht nur die eng tolerierten Fittings und Rohre, sondern vor allem auch die Preßbacke und ihre festgelegte Kontur und die dazugehörigen auf Dauerbetrieb ausgelegten Preßwerkzeuge, die den Erfolg einer einwandfrei und dauerhaft funktionsfähigen Rohrverbindung sicherstellt. Die Konsequenz daraus ist, daß jede Preßfittingform eine ganz spezifische Preßbackenkontur erfordert. Denn nur so kann sichergestellt werden, daß nach der Verpressung die Dichtringe jene Kompression erhalten, die die dauerhafte Dichtheit gewährleisten.

Beim Mischen von Preßfittings und Preßbacke verschiedener Systeme ergeben sich demgemäß verpreßte Fittingkonturen, die den Anspruch der Festigkeit, insbesondere aber der dauerhaften Dichtheit nicht erfüllen können.

Der Betreiber solcher Preßfitting-Systeme fragt sich angesichts dieser Problematik, wie er möglichst einfach und reproduzierbar erkennen kann, ob eine ordnungsgemäße Verpressung erfolgt ist oder nicht.

Aufgabe der Erfindung ist es, ein Verfahren und eine Vorrichtung zum Herstellen einer Rohrpreßverbindung anzugeben, mit der in einfacher Weise die einwandfreie und dauerhaft funktionsfähige Verpressung erkannt werden kann.

Diese Aufgabe wird bei einem gattungsgemäßen Verfahren mit den im kennzeichnenden Teil des Hauptanspruches angegebenen Merkmalen gelöst. Vorteilhafte Weiterbildungen sowie eine Vorrichtung zur Durchführung des Verfahrens sind Bestandteile von Unteransprüchen.

Erfindungsgemäß wird beim Verpressen im Kontaktbereich mindestens einer Preßbacke mit der äußeren Oberfläche des Preßfittings ein charakteristisches Prägezeichen plastisch angeformt, dessen Ausprägung abhängig ist von der Qualität der Verpressung. Dies bedeutet, daß bei Verwendung der vom Systemanbieter zugelassenen Komponenten einschließlich Preßbacke und Preßwerkzeug und bei völligem Schließen der Preßbacken das angeformte Prägezeichen seine charakteristische Ausprägung erhält. In allen anderen Fällen ist die Ausprägung unvollkommen. Dies ist sofort zu erkennen. In einem solchen Fall muß nachgeprüft werden, ob die vom Systemanbieter zugelassenen Komponenten, die im Regelfall vom Hersteller stückweise gekennzeichnet sind, verwendet worden sind und die Preßbacken am Ende der Verpressung voll geschlossen waren. Die erfindungsgemäße Anformung eines charakteristischen Prägezeichens ist ein Hilfsmittel, um in einfacher Weise die Qualität der Verpressung überprüfen zu können.

Die Herstellung des Prägezeichens kann in der Weise enfolgen, daß im Preßsteg eine im wesentlichen in Preßrichtung verlaufende Ausnehmung angebracht wird. Die Abhängigkeit der Qualität der Verpressung mit der Art der Ausprägung des Zeichens ist in der Weise gegeben, daß nur bei Verwendung der vom Systemanbieter zugelassenen Komponenten und nur bei voll geschlossenen Preßbacken das Zeichen seine volle Ausprägung (in Höhe, Form) erhält. In jedem anderen Fall wird die Ausprägung sichtbar und erkennbar unvollkommen sein. Dies eröffnet der vom Bauherrn beauftragten Kontrollinstanz die Möglichkeit, nach dem Verpressen alle Verpreßstellen visuell zu kontrollieren und die Ausprägung des Prägezeichens zu begutachten. Im Zweifelsfall müßte dann die fragwürdige Verpreßstelle weiter untersucht und ggf. herausgeschnitten werden.

In der Zeichnung wird anhand eines Ausführungsbeispiels das erfindungsgemäße Verfahren näher erläutert. Es zeigen:
- Figur 1: eine Teilansicht einer ordnungsgemäß verpreßten Rohrverbindung;
- Figur 2: einen Schnitt in Richtung A-A in Figur 1 mit dem dazugehörigen Preßwerkzeug;
- Figur 3: eine Ansicht in Richtung X in Figur 2

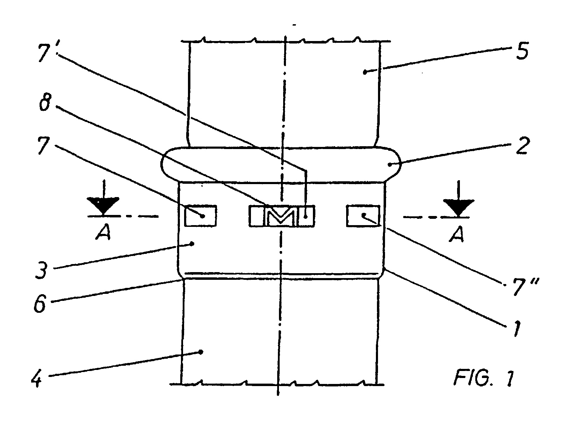

Figur 1 zeigt eine Teilansicht einer ordnungsgemäß verpreßten Rohrverbindung. Sie besteht aus dem Preßfitting 1, der einen sickenartig ausgebildeten Wulst 2, einen ersten zylindrischen Abschnitt 3 und einen zweiten zylindrischen Abschnitt 4 aufweist. Dabei entspricht in etwa die Länge des ersten zylindrischen Abschnittes 3 der erforderlichen Einschubtiefe für das zu verbindende Leitungsrohr 5, wobei der Durchmessersprung zum benachbart liegenden zweiten zylindrischen Abschnitt 4 einen Anschlag 6 für das einzuschiebende Rohr 5 bildet. Im sickenartig ausgebildeten Wulst 2 ist ein Dichtring angeordnet, der in dieser Darstellung aber nicht sichtbar ist. Durch die plastische Verformung des Wulstes 2 wird der Dichtring so stark eingekammert, daß er mit einer entsprechenden Vorspannung entlang der Berührungsfläche zur Anlage kommt und die hydraulische Dichtheit sicherstellt. Die axiale Sicherung gegen ein Herausschieben des Rohres 5 erfolgt über eine beispielsweise hexagonale Anpressung im erstgenannten zylindrischen Abschnitt 3. Die sichtbaren bleibenden Einpressungen 7, 7', 7" bilden Rechteckflächen und sind auf der hier nicht sichtbaren Unterseite ebenfalls vorhanden. Erfindungsgemäß wird in diesem Kontaktbereich des Preßwerkzeuges mit dem Preßfitting 1 ein charakteristisches Prägezeichen 8 angeformt. In diesem Beispiel ist es ein stilisiertes großes M. Der Ausprägungsgrad dieses Zeichens ist, wie zuvor in der Beschreibung bereits ausführlich erläutert, abhängig von der Qualität der Verpressung.

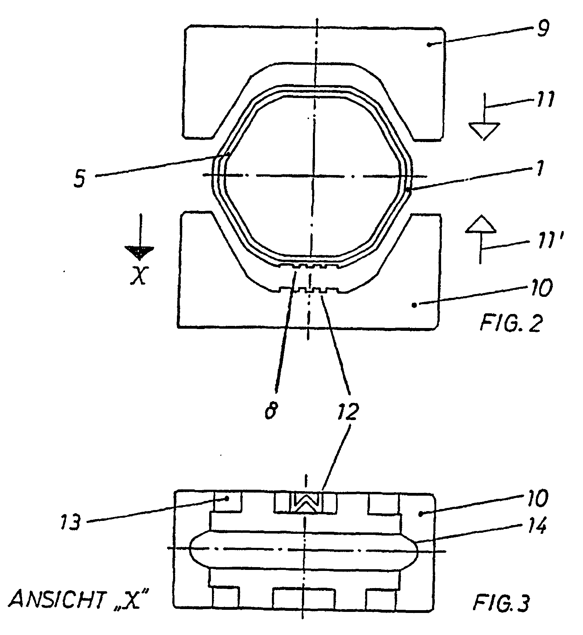

Figur 2 zeigt in einem Schnitt in Richtung A-A in Figur 1 die ordnungsgemäß verpreßte Rohrverbindung. Zum besseren Verständnis ist andeutungsweise das in diesem Ausführungsbeispiel aus zwei Preßbacken 9, 10 bestehende Werkzeug mit eingezeichnet worden. Die offenen Pfeile 11, 11' sollen andeuten, daß beim Verpressen die beiden Preßbacken 9, 10 aufeinander zugefahren werden. Das plastisch angeformte Prägezeichen 8 auf dem zylindrischen Abschnitt 3 des Preßfittings 1 sowie die entsprechende Ausnehmung 12 in der unten liegenden Preßbacke 10 sind deutlich zu erkennen.

In der in Figur 3 dargestellten Ansicht ist ebenfalls die im Preßsteg 13 vorgenommene Ausnehmung 12 zu erkennen. Auch die konturierte Ausnehmung 14 zur Anformung des Wulstes 2 ist dieser Ansicht zu entnehmen.

## Patentansprüche

1. Verfahren zum Herstellen einer Rohrpreßverbindung, bestehend aus einem einen Anschlag aufweisenden Preßfitting und damit verpreßbaren glattendigen Leitungsrohrabschnitt, bei dem nach dem Abtrennen des Leitungsrohrabschnittes das abgeschnittene Ende innen und außen entgratet ggf. die das Leitungsrohr schützende Schutzschicht abgemantelt wird, anschließend das bearbeitete Leitungsrohrende in den Preßfitting bis zum Anschlag eingeschoben und anschließend mittels eines den Preßfitting umfassenden einzelne Preßbacken aufweisenden Preßwerkzeuges der Preßfitting nach dem Ansetzen des Preßwerkzeuges kraft- und formschlüssig mit dem eingeschobenen Leitungsrohrabschnitt zu einer unlösbar, dichten Rohrverbindung verpreßt wird, wobei zum Preßende hin die einzelnen Preßbacken sich zu einem geschlossenen Preßraum ergänzen und Einpressungen erzeugen,
**dadurch gekennzeichnet,**
**dass** beim Verpressen im Kontaktbereich mindestens einer Preßbacke mit der äußeren Oberfläche des Preßfittings in der Einpressung ein charakteristisches Prägezeichen plastisch angeformt wird, dessen Ausprägungsgrad abhängig ist von der Qualität der Verpressung.

2. Verfahren nach Anspruch 1,
**dadurch gekennzeichnet,**
**dass** das Prägezeichen erhaben angeformt wird.

3. Vorrichtung zur Durchführung des Verfahrens nach Anspruch 1 mit einem Preßfitting, der mindestens einen im Querschnitt wulstartig einen Dichtring aufnehmenden Abschnitt und einen daran anschließenden zylindrisch ausgebildeten Bereich aufweist, der am Ende der Erstreckung mit einer sickenförmigen Vertiefung versehen ist und einem in den Preßfitting bis zum Anschlag einschiebbaren und damit verpreßbaren glattendigen Endbereich eines Leitungsrohrabschnittes sowie einer den Preßfitting umfassenden, einzelne Preßbacken aufweisenden Preßschlinge bzw. Preßzange, wobei in den Preßbacken innenseitig eine jeweils in Umfangsrichtung laufende Preßnut eingeformt ist und entlang mindestens einer Seite der Preßnut ein Preßsteg verläuft,
**dadurch gekennzeichnet,**
**dass** im Preßsteg (13) mindestens einer Preßbacke (10) eine im wesentlichen in Preßrichtung liegende Ausnehmung (12) vorgesehen ist, die die Form eines charakteristischen Prägezeichens hat.

4. Vorrichtung nach Anspruch 3,
**dadurch gekennzeichnet,**
**dass** die Ausnehmungen symmetrisch über den Preßraum verteilt sind.

5. Vorrichtung nach einem der Ansprüche 3 bis 4,
**dadurch gekennzeichnet,**
**dass** die Ausnehmung (12) im Scheitelbereich des Segmentes der jeweiligen Preßbacke (10) angeordnet ist.

## Claims

1. Method of manufacturing a press-fitted pipe connection, consisting of a press fitting having a stop and a smooth-ended duct section capable of being pressed against the same, wherein after separation of the duct section the cut-off end is trimmed inside and out, or the protective coating protecting the duct is peeled off, then the operating duct end is inserted into the press fitting as far as the stop and then, by means of a press tool having single press jaws gripping the press fitting, after application of press tool with non-positive and positive locking, the press fitting is pressed together with the inserted duct section to form an irreversible, sealing-tight pipe connection, and towards the press end, the individual press jaws make up a closed press chamber and produce squeezing members, **characterised in that** during pressing in the contact region of at least one press jaw with the outer surface of the press fitting in the squeezing member, a characteristic indentation mark is plastically formed, whose degree of indentation is dependent on the quality of pressing.

2. Method according to claim 1, **characterised in that** the indentation mark is made proud.

3. Device for carrying out the method according to claim 1 with a press fitting, which has at least one section with a bulging cross-section and receiving a sealing ring and an adjoining cylindrically formed region, which is provided at the end of the extension with a bead-like recess and with a smooth-ended end region of a duct section capable of being inserted in the press fitting as far as the stop and of being pressed together with the same, as well as a press loop or pincer having individual press jaws, wherein a press groove extending respectively in the circumferential direction is formed on the inside of the press jaws and a press web extends along at least one side of the press groove, **characterised in that** in the press web (13) of at least one press jaw (10) a recess (12) lying substantially in the pressing direction is provided and has the form of a characteristic indentation mark.

4. Device according to claim 3, **characterised in that** the recesses are distributed symmetrically over the press chamber.

5. Device according to either of claims 3 or 4, **characterised in that** the recess (12) is disposed in the crown region of the segment of the respective press jaw (10).

## Revendications

1. Procédé pour réaliser une liaison par pressage pour tube, constituée d'un raccord de pressage présentant une butée et d'un tronçon de conduit à extrémité lisse pouvant être pressé avec celui-ci, dans lequel, après la séparation du tronçon de conduit, l'extrémité découpée est ébarbée intérieurement et extérieurement et, le cas échéant, la couche protectrice protégeant le conduit est retirée, ensuite, l'extrémité du conduit traitée est introduite dans le raccord de pressage jusqu'à la butée et, par la suite, au moyen d'un outil de pressage présentant des mâchoires de pressage individuelles entourant le raccord de pressage, le raccord de pressage est pressé après la mise en place de l'outil de pressage, par coopération de formes et sous l'influence d'une force, avec le tronçon de conduit introduit en une liaison pour tube étanche et inamovible, les mâchoires de pressage individuelles vers la fin du pressage, se complétant en un espace de pressage fermé et engendrant des empreintes,
**caractérisé en ce que**, lors du pressage dans la zone de contact d'au moins une mâchoire de pressage avec la surface externe du raccord de pressage dans l'empreinte, il est formé de façon plastique un signe d'empreinte caractéristique, dont le degré d'empreinte dépend de la qualité du pressage.

2. Procédé selon la revendication 1,
**caractérisé en ce que** le signe d'empreinte est formé en relief.

3. Dispositif pour mettre en oeuvre le procédé selon la revendication 1, comportant un raccord de pressage qui présente au moins un tronçon recevant une bague d'étanchéité du type bourrelet en section transversale et une zone réalisée de façon cylindrique s'y raccordant, qui est munie, à l'extrémité de son extension, d'un évidement en forme de moulure, et une zone d'extrémité à bout lisse, pouvant être introduite dans le raccord de pressage jusqu'à la butée et, ainsi, pouvant être pressée, d'un tronçon de conduit, ainsi qu'une pince de pressage ou boucle de pressage présentant des mâchoires de pressage individuelles, entourant le raccord de pressage, une rainure de pressage s'étendant à chaque fois en direction périphérique étant formée intérieurement dans les mâchoires de pressage et une âme de pressage s'étendant le long d'au moins un côté de la rainure de pressage,
**caractérisé en ce que**, dans l'âme de pressage (13) d'au moins une mâchoire de pressage (10), il est prévu un évidement (12) se trouvant généralement dans la direction de pressage qui présente la forme d'un signe d'empreinte caractéristique.

4. Dispositif selon la revendication 3,
**caractérisé en ce que** les évidements sont répartis de façon symétrique sur l'espace de pressage.

5. Dispositif selon une des revendications 3 à 4,
**caractérisé en ce que** l'évidement (12) est agencé dans la zone de sommet du segment de la mâchoire de pressage respective (10).
